(19) Europäisches Patentamt
European Patent Office
Office européen des brevets

(11) EP 2 303 781 B1

(12) EUROPÄISCHE PATENTSCHRIFT

(45) Veröffentlichungstag und Bekanntmachung des Hinweises auf die Patenterteilung:
**03.08.2016 Patentblatt 2016/31**

(21) Anmeldenummer: **09753688.2**

(22) Anmeldetag: **29.05.2009**

(51) Int Cl.:
***C01G 53/04*** (2006.01) ***B01J 23/755*** (2006.01)

(86) Internationale Anmeldenummer:
**PCT/EP2009/003881**

(87) Internationale Veröffentlichungsnummer:
**WO 2009/144033 (03.12.2009 Gazette 2009/49)**

(54) **VERFAHREN ZUR HERSTELLUNG NANOKRISTALLINER NICKELOXIDE**

METHOD FOR THE PRODUCTION OF NANOCRYSTALLINE NICKEL OXIDES

PROCÉDÉ DE PRODUCTION D’OXYDES DE NICKEL NANOCRISTALLINS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.05.2008 DE 102008026209**

(43) Veröffentlichungstag der Anmeldung:
**06.04.2011 Patentblatt 2011/14**

(73) Patentinhaber: **Süd-Chemie IP GmbH & Co. KG**
**80333 München (DE)**

(72) Erfinder:
- **WÖLK, Hans-Jörg**
  **83022 Rosenheim (DE)**
- **HAGEMEYER, Alfred**
  **83043 Bad Aibling (DE)**
- **GROSSMANN, Frank**
  **81667 München (DE)**
- **NEUMANN, Silvia**
  **83109 Grosskarolinenfeld (DE)**
- **MESTL, Gerhard**
  **80935 München (DE)**

(74) Vertreter: **Silber, Anton et al**
**Clariant Produkte (Deutschland) GmbH**
**Patent & License Management**
**Lenbachplatz 6**
**80333 München (DE)**

(56) Entgegenhaltungen:
**WO-A-2006/027270**
**WO-A-2008/021256**
**WO-A-2008/028681**
**DE-A1-102006 032 452**
**US-A- 5 600 030**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 303 781 B1

## Beschreibung

Die vorliegende Erfindung betrifft ein Verfahren zur Herstellung von nanokristallinen Nickeloxiden.

Ein vergleichbarer Katalysator ist dem Fachmann unter der Bezeichnung Raney-Nickel bekannt. Dabei handelt es sich um eine Nickel-Aluminium-Legierung, welche durch herauslösen eines Großteils des Aluminiums mit Natronlauge zum aktivierten Raney-Nickel umgesetzt wird. Durch die daraus resultierende poröse Struktur und somit große BET-Oberfläche besitzt Raney-Nickel eine hohe katalytische Aktivität, insbesondere bei Hydrierungsreaktionen. Kommerziell erhältliches Raney-Nickel weist eine durchschnittliche Nickeloberfläche von bis zu 100 $m^2/g$ auf. Nachteilig bei der Verwendung von Raney-Nickel ist jedoch, dass aufgrund der großen Oberfläche und Reaktivität dieses sich an Luft spontan und explosionsartig zersetzen kann. Somit ist insbesondere im großtechnischen Einsatz die Verwendung von Raney-Nickel problematisch.

Anstelle von Raney-Nickel als Katalysator kann auch Nickeloxid als Precursor eingesetzt werden, welcher durch Reduktion in einen aktiven Nickelkatalysator umgewandelt werden kann. Leider hat Nickeloxid, welches nach im Stand der Technik bekannten Methoden hergestellt wird, eine zu geringe BET-Oberfläche, so dass die katalytische Aktivität des Nickels, welches aus dem Nickeloxid durch Reduktion erhalten wird, häufig nicht für chemische Umsetzungen ausreichend ist.

Verfahren zur Herstellung von Metalloxiden mittels einer pulsierenden Strömung sind aus WO 2006/027270 A, DE 10 2006 032452 A1 und WO 2008/028681 A bekannt.

Die Aufgabe der vorliegenden Erfindung bestand somit darin, ein Verfahren bereit zu stellen, bei dem Nickeloxid mit einer möglichst großen BET-Oberfläche und hoher katalytischer Aktivität (nach Reduktion zum Nickel-Metall) erhalten werden kann. Das Verfahren soll außerdem leicht durchführbar und kostengünstig sein.

Die Aufgabe wird gelöst durch ein Verfahren zur Herstellung von nanokristallinem Nickeloxidmaterial, umfassend die Schritte

a) des Einbringens einer Nickelausgangsverbindung in eine Reaktionskammer mittels eines Trägerfluids, wobei die Nickelausgangsverbindung ein Salz einer organischen Säure ist und wobei die Nickelausgangsverbindung in Form einer Lösung, Aufschlämmung, Suspension oder in festem Aggregatszustand in die Reaktionskammer eingebracht wird,
b) einer thermischen Behandlung der Nickelausgangsverbindung in einer Behahdluhgszohe mittels einer pulsierenden Strömung bei einer Temperatur von 200 bis 550 °C,
c) des Bildens von nanokristallinem Nickeloxidmaterial,
d) des Ausbringens des in Schritt b) und c) erhaltenen nanokristallinen Nickeloxidmaterials aus dem Reaktor.

Überraschenderweise wurde gefunden, dass das Verfahren bei relativ niedrigen Temperaturen von 200 bis 550 °C, besonders bevorzugt von 230 bis 500 °C, besonders bevorzugt von 250 bis 480 °C durchgeführt werden kann. Bislang waren im Stand der Technik bevorzugte Temperaturen von mehr als 700 °C, und zwar bis zu 1400 °C bekannt. Ganz besonders überraschend wurde auch gefunden, dass durch das erfindungsgemäße Verfahren der Kristallisationsprozess des Nickeloxids gezielt gesteuert werden kann, insbesondere die Größe der Kristallite und die Porengrößenverteilung der entsprechenden Nickeloxide. Dies kann weiter durch die Verweilzeit in der Flamme bzw. durch die Reaktortemperatur weiter vorteilhaft beeinflusst werden. Durch die pulsierende thermische Behandlung werden die entstehenden nanokristallinen Nickeloxidpartikel daran gehindert, zu agglomerieren. Typischerweise werden die nanokristallinen Partikel spfort durch den Strom an heißem Gas in eine kältere Zone überführt, wo die Nickeloxidkristallite zum Teil mit Durchmessern von weniger als 20 nm erhalten werden.

Dies führt bei den so erhältlichen Nickeloxidkristalliten zu sehr hohen BET-Oberflächen von > 50 $m^2/g$, besonders bevorzugt > 100 $m^2/g$ und besonders bevorzugt > 150 $m^2/g$. Insbesondere konnten nach dem erfindungsgemäßen Verfahren Nickeloxide mit einer BET-Oberfläche von bis zu 350 $m^2/g$, bevorzugt von 200 bis 300 $m^2/g$ erhalten werden. Die Bestimmung der BET-Oberfläche erfolgt nach DIN 66132 (nach der Methode von Brunauer, Emmett und Teller).

Als vorteilhaft hat sich herausgestellt, wenn das Nickelausgangsmaterial auf einen Teilchendurchmesser von < 10 $\mu$m, bevorzugt < 5 $\mu$m, besonders bevorzugt < 2 $\mu$m und insbesondere < 1 $\mu$m gemahlen wird. Vorzugsweise erfolgt die Bestimmung der Teilchengröße durch das Debye-Scherrer-Verfahren in Zusammenhang mit Röntgenbeugung und einer Rietveld-Verfeinerung.

Das von Peter Debye und Paul Scherrer sowie unabhängig davon von Albert Hull entwickelte Verfahren arbeitet nicht mit Einkristallen, sondern mit pulverförmigen Proben. Das Pulver besteht aus einer Reihe zufällig angeordneter Kristallite, so dass auch die Netzebenen zufällig im Raum angeordnet sind und so einige Kristallite immer die Bragg'sche Reflexionsbedingung erfüllen. Zusätzlich rotiert die Probe um eine Achse senkrecht zum einfallenden Strahl. Um die Probe herum bilden sich Kegelmäntel aus Röntgenstrahlen, welche aus der konstruktiven Interferenz stammen. Um die Probe liegt ein fotographischer Film, auf dem sich die Kegelmäntel als Reflexe abzeichnen. Aus den Abständen der vom einfallenden Strahl auf dem Film aufgenommenen Reflexe lässt sich der Glanzwinkel $\theta$ berechnen:

$$x/2\pi R = 4\ \theta/360°$$

Der Abstand x des Beugungsreflexes auf dem Film vom einfallenden Strahl verhält sich zum Umfang der Kamera $x/2\pi R$ wie der Öffnungswinkel des entsprechenden Beugungskegels zu 360°. Hinsichtlich der Röntgendiffraktometrischen Rietveld-Analyse verweisen wir zudem auf R. Kriegel, Ch. Kaps, Thüringer Werkstofftag "Röntgendiffraktometrische Rietveld-Analyse von nanokristallinen Precursoren und Keramiken", Verlag Dr. Köster, Berlin 2004, Seiten 51-56, dessen Offenbarung hierin durch Bezugnahme aufgenommen ist.

Eine geringere Teilchengröße des Nickelausgangsmaterials führt zu einer weiteren Erhöhung der spezifischen Oberfläche des erfindungsgemäß erhaltenen Nickeloxids, wobei der Restkohlenstoffgehalt dagegen sinkt. Ursache dafür ist der schnellere Wärmetransport ins Innere des Teilchens bei der Umsetzung im pulsierenden Wirbelschichtreaktor und damit die Schaffung der notwendigen Bedingungen für eine Reaktionsumsetzung auch im Teilchen selbst und nicht nur im äußeren Schalenbereich.

Die Einstellung der bevorzugten Teilchengröße erfolgt vorzugsweise durch Feuchtvermahlen, das heißt durch Vermahlen einer Suspension der Nickelausgangsverbindung in einem Dispergiermittel. Das Vermahlen kann beispielsweise in einer Kugelmühle, Perlenmühle, Schlagmühle, einer Ringspaltmühle oder anderen im Stand der Technik bekannten Mühlen erfolgen. Auch eine Vorbehandlung der Suspension mittels eines Dispergierers (zum Beispiel Ultra Turrax T50) vor dem Vermahlen hat sich als vorteilhaft herausgestellt.

In dem erfindungsgemäßen Verfahren können Suspensionen ohne zusätzliche Filtrations- und/oder Trocknungsschritte bzw. ohne Zugabe von zusätzlichen Lösungsmitteln innerhalb eines sehr kurzen Zeitraumes, typischerweise innerhalb weniger Millisekunden, bei vergleichsweise niedrigeren Temperaturen als bei Verfahren des Standes der Technik üblich, kalziniert werden. Die entstehenden Nickelnanokristallite weisen signifikant erhöhte BET-Oberflächen auf und stellen somit nach einer Reduktion zum Nickelmetall einen Nickelkatalysator mit erhöhter Reaktivität, verbessertem Umsatz und verbesserter Selektivität dar.

Durch die annähernd gleiche Verweilzeit jedes Nickeloxidpartikels in dem durch das Verfahren erzeugten homogenen Temperaturfeld entsteht ein äußerst homogenes Endprodukt mit enger monomodaler Teilchenverteilung. Eine Vorrichtung zur Durchführung des erfindungsgemäßen Verfahrens bei der Herstellung derartiger monomodaler nanokristalliner Metalloxidpulver ist beispielsweise aus der DE 101 09 892 A1 bekannt. Im Gegensatz zu der dort beschriebenen Vorrichtung und dem dort offenbarten Verfahren benötigt das vorliegende Verfahren jedoch keinen vorgelagerten Verdampfungsschritt, in dem der Ausgangsstoff, d.h. die Nickelausgangsverbindung, auf eine Verdampfungstemperatur erwärmt wird.

Die Nickelausgangsverbindung, aus der die Nickeloxidmaterialien hergestellt werden, werden direkt über ein Trägerfluid, insbesondere ein Trägergas, vorzugsweise ein inertes Trägergas, wie beispielsweise Stickstoff usw., in so genannte Reaktionskammern, d.h. in die Brennkammer, eingeführt. An die Reaktionskammer ist abgasseitig ein Resonanzrohr mit einem gegenüber der Reaktionskammer deutlich verringertem Strömungsquerschnitt angeschlossen. Der Brennkammerboden ist mit mehreren Ventilen zum Eintritt der Verbrennungsluft in die Brennkammer ausgestattet. Die aerodynamischen Ventile sind dabei strömungstechnisch und akustisch so mit der Brennkammer und der Resonanzrohrgeometrie abgestimmt, dass die in der Brennkammer erzeugten Druckwellen des homogenen "flammenlosen" Temperaturfeldes sich vorwiegend im Resonanzrohr pulsierend ausgleiten. Es bildet sich ein so genannter Helmholtzresonator mit pulsierender Strömung aus mit einer Pulsationsfrequenz zwischen 3 und 150 Hz, bevorzugt 10 bis 110 Hz.

Die Materialzuführung in die Reaktionskammer erfolgt typischerweise entweder mit einem Injektor oder mit einer geeigneten Zweistoffdüse oder in einem Schenkdosierer.

Bevorzugt wird die Nickelausgangsverbindung in verdüster Form in die Reaktionskammer eingebracht, sodass eine feine Verteilung im Bereich der Behandlungszonen gewährleistet ist.

Als Nickelausgangsverbindung wird ein Salz einer organischen Säure verwendet, wobei als organische Säure bevorzugt eine Säure mit wenigstens einer Carboxylgruppe eingesetzt wird. Vorzugsweise wird als organische Säure eine Säure verwendet, die weniger als 9, vorzugsweise weniger als 8, besonders bevorzugt 1 bis 7 Kohlenstoffatome aufweist. Ganz besonders bevorzugt ist es, wenn als organische Säure Glyoxylsäure oder Oxalsäure eingesetzt wird. Am meisten bevorzugt ist die organische Säure Oxalsäure.

Neben der Nickelausgangsverbindung können auch weitere Verbindungen, beispielsweise Trägermaterialien oder deren Vorstufen, Binder und/oder Promotoren gleichzeitig mit der Nickelausgangsverbindung verdüst werden. Vorteilhaft kann beispielsweise eine Aluminiumverbindung mit verdüst werden um ein Nickel-Aluminium-System zu erhalten, welches durch Reduktion in einen Nickel-Aluminium-Katalysator (z.B. vergleichbar mit Raney Nickel) umgewandelt werden kann. Auch ist es möglich, beispielsweise Aluminiumnitrat mit einer Nickelausgangsverbindung zu verdüsen, wobei durch die Kalzinierung im Pulsationsreaktor ein auf Aluminiumoxid geträgertes Nickeloxid erhalten werden kann.

Auch andere Elemente oder Verbindungen können in dem erfindungsgemäßen Verfahren eingesetzt werden,

insbesondere Promotoren, vorzugsweise ausgewählt aus Al, W, Pd, Pt, Rh, Ru, Ag, Nb, Cu, Cr, Co, Mo, Fe und/oder Mn. Die Promotoren werden vorzugsweise in Form ihrer Salze mit dem Nickelausgangsmaterial im Pulsationsreaktor mitverdüst und umgesetzt. Die Promotoren können aber auch im Anschluss an die Herstellung des Nickeloxids auf herkömmliche Weise, beispielsweise durch einen Metalleintausch oder eine Imprägnierung in das Nickeloxidmaterial eingebracht werden. Man kann durch die oben genannten Weisen sehr einfach zu nickelhaltigen Mischungen oder Mischverbindungen kommen.

Nach der thermischen Behandlung werden die entstandenen nanokristallinen Nickeloxide (oder nickelhaltigen Mischungen oder Mischverbindungen), wenn möglich mittels des Trägerfluids, sofort in eine kältere Zone der Reaktionskammer überführt, sodass sie in der kälteren Zone abgeschieden und ausgetragen werden können. Die Ausbeute des erfindungsgemäßen Verfahrens beträgt nahezu 100%, da das entstehende Produkt vollständig aus dem Reaktor ausgetragen werden kann.

Typischerweise wird das Verfahren bei einem Druck im Bereich von Normaldruck bis etwa 40 bar durchgeführt.

Es wurde gefunden, dass das so erhältliche nanokristalline Nickeloxidmaterial bevorzugt eine Kristallitgröße im Bereich von 4 nm bis 100 $\mu$m, bevorzugt von 5 nm bis 50 $\mu$m, ganz besonders bevorzugt 6 bis 100 nm aufweist, was, wie vorstehend schon ausgeführt, durch die Pulsation der thermischen Behandlung bevorzugt eingestellt werden kann. Die Bestimmung der Teilchengröße kann durch XRD oder TEM erfolgen.

Weiterhin werden durch das erfindungsgemäße Verfahren Nickeloxidteilchen erhalten, die eine BET-Oberfläche von vorzugsweise > 50 $m^2$/g, besonders bevorzugt > 100 $m^2$/g und besonders bevorzugt > 150 $m^2$/g besitzen. Insbesondere konnten nach dem erfindungsgemäßen Verfahren Nickeloxide mit einer BET-Oberfläche von bis zu 350 $m^2$/g, bevorzugt von 200 bis 300 $m^2$/g erhalten werden. Dabei sinkt der Restkohlenstoffgehalt auf $\leq$ 50 Gew.-%, bevorzugt auf $\leq$ 20 Gew.-%. Besonders bevorzugt beträgt der Restkohlenstoffgehalt $\leq$ 7,5 Gew.-%, noch mehr bevorzugt $\leq$ 3 Gew.-% und insbesondere $\leq$ 1 Gew.-%.

Ein Vorteil des Nickeloxidmaterials liegt darin, dass es nach Reduktion zum Nickelmetall als Ersatz für Raney-Nickel verwendet werden kann und in weitaus geringerem Maße explosionsgefährdet ist. Es eignet sich somit hervorragend für den großtechnischen Einsatz. Das Nickeloxidmaterial eignet sich nach Reduktion zum Nickelmetall in hervorragender Weise als Hydrierkatalysator, beispielsweise zur Umsetzung von bzw. zur Reduktion von Komponenten mit Mehrfachbindung, wie zum Beispiel Alkine, Alkene, Nitride, Polyamine, Aromaten und Stoffen der Carbonylgruppe. Zusätzlich können mit der Nickeloxidverbindung nach Reduktion zum Nickelmetall Heteroatom-Heteroatombindungen von organischen Nitroverbindungen, zum Beispiel Nitrosamine, reduziert werden. Die Alkylierung von Aminen, die Aminierung von Alkoholen, eine Methanisierung, Polymerisationsreaktionen oder die Kumada-Kopplung stellen weitere Anwendungsgebiete dar.

Das Nickeloxidmaterial kann mit einem geeigneten Trägermaterial, beispielsweise Aluminiumoxid, und einem geeigneten Bindemittel, beispielsweise Boehmit oder Pseudoboehmit, zu einem Formkörper extrudiert werden. Ebenso kann auch ein Aluminiumprecursor verwendet werden, z.B. Aluminiumnitrat oder peptisiertes Boehmit, welches zusammen mit der Nickelausgangsverbindung nach dem erfindungsgemäßen Verfahren im Pulsationsreaktor umgesetzt wird. Ein so hergestelltes Nickelmischoxid bzw. die oxidische Mischung kann dann sofort in eine gewünschte Form verpresst werden, beispielsweise in eine einfache Tablettenform. Das $NiO/Al_2O_3$-Molverhältnis wird dabei bevorzugt an das von herkömmlichen Nickel-Hydrierkatalysatoren angepasst und beträgt bevorzugt 60:40 bis 40:60, bevorzugt 55:45 $NiO/Al_2O_3$.

Die Erfindung soll nun anhand der nachstehenden und nicht als einschränkend zu verstehenden Ausführungsbeispiele näher erläutert werden. Die verwendete Vorrichtung entspricht dabei wie vorstehend schon erwähnt weitgehend der in der DE 101 09 892 A1 beschrieben Vorrichtung, mit dem Unterschied, dass die zur Durchführung des erfindungsgemäßen Verfahrens verwendete Vorrichtung keine Verdampfervorstufe aufwies.

## Ausführungsbeispiele

### Beispiel 1: Herstellung der Suspension

Als Rohstoffe für diesen Versuch wurde Nickeloxalatdihydrat ($NiC_2O_4 \times 2\ H_2O$) zweier Hersteller, Fa. Molekula, bzw. Alfa Aesar, verwendet. Aus diesen Rohstoffen wurde eine Suspension wie folgt hergestellt:

5 kg Nickeloxalatdihydrat der Fa. Molekula bzw. 4 kg von der Fa. Alfa Aesar wurden mit 45 bzw. 35 kg destilliertem Wasser versetzt. Die Suspensionen wurden mittels eines Dispergierers (Ultra Turrax T50) 4 Minuten bei 8.000 U/min mechanisch vorbehandelt. Ziel war dabei die Verkleinerung der Teilchengröße. Beide Suspensionen wurden zusammengeführt und homogenisiert.

Die mittlere Teilchengröße ($d_{50}$) des Ausgangsrohstoffes Nickeloxalat differierte bei den beiden Lieferanten. Das Nickeloxalat der Fa. Molekula wies dabei eine mittlere Teilchengröße von 3,7 $\mu$m und dass der Fa. Alfa Aesar von 9,1 $\mu$m auf. Aus dem Mengenverhältnis der beiden eingesetzten Nickeloxalate ergibt sich entsprechend in der Suspension, welche durch Vereinigung der beiden Suspensionen erhalten wurde, eine mittlere Teilchengröße von 6,1 $\mu$m. An

dieser vereinten mechanisch behandelten Suspension wurde jedoch eine mittlere Teilchengröße von 4,7 μm ermittelt. Damit führte die mechanische Behandlung der Suspension zu einer Reduzierung der mittleren Teilchengröße um 1,4 μm.

Das Absetzen des Feststoffes der hergestellten Suspension wurde durch Rühren während des gesamten Versuchsbetriebs unterbunden.

**Beispiel 2: Herstellung von Nickeloxid aus der Suspension**

Die in Beispiel 1 hergestellte Suspension wurde über eine Zweistoffdüse in die thermische Anlage mit einer Aufgabemenge von 14 kg/h eingesprüht. Dabei wurden unterschiedliche Prozessbedingungen für die jeweiligen Versuchspunkte eingestellt.

Am Probenmaterial der einzelnen Versuchspunkte wurde die spezifische Oberfläche und die Konzentration an Gesamtkohlenstoff bestimmt.

Tabelle 1:

| Versuchspunkt | Temperatur [°C] | Spezifische Oberfläche (nach BET) [$m^2/g$] | $C_{ges}$. [Gew.-%] |
|---|---|---|---|
| | 300 | 69 | - |
| 2 | 325 | 74 | - |
| 3 | 350 | 66 | 10,8 |
| 4 | 375 | 85 | 9,8 |
| 5 | 400 | 102 | - |
| 6 | 425 | 120 | 7,3 |

In Fig. 1 ist die Abhängigkeit der spezifischen Oberfläche und der Kohlenstoffkonzentration von der Reaktionstemperatur dargestellt.

Mit steigender Temperatur nimmt der Kohlenstoff-Gehalt kontinuierlich ab, die spezifische Oberfläche dagegen zu. Bei 425 °C wurde Nickeloxid mit einer spezifischen Oberfläche von 120 $m^2/g$ und einem Restkohlenstoff-Gehalt von 7,3 Gew.-% erhalten.

Die notwendigen Reaktionen zur thermischen Umsetzung des Nickeloxalats zum Nickeloxid bedingt eine notwendige Prozesstemperatur des Teilchens. Da der Wärmeübergang vom Heißgas zum Teilchen erfolgt und anschließend durch Wärmeleitung von der Teilchenoberfläche in das Innere des Teilchens, bildet sich zunächst ein Wärmegradient über den Querschnitt des Teilchens aus. Die Größe des Gradienten hängt dabei beispielsweise von der Verweilzeit und dem Teilchendurchmesser ab. Ein Wärmegradient über den Teilchendurchmesser führt zu unterschiedlichen Reaktionsumsetzungen, im speziellen Fall zu unterschiedlicher Intensität der Umsetzung von Nickeloxalat.

Die Verlängerung der Verweilzeit führt zu einer besseren Reaktionsumsetzung im Teilcheninneren, ist aber an der pulsierenden Wirbelschicht nicht in dem notwendigen Maße realisierbar. Eine weitere Steigerung der Prozesstemperatur würde den Restkohlenstoff-Gehalt im Produkt weiter reduzieren, da die Zersetzung von Nickeloxalat speziell im Teilcheninneren fortschreitet, birgt jedoch die Gefahr des Einsetzens von Sinterung, besonders im Oberflächenbereich. Damit verbunden wäre eine Reduzierung der spezifischen Oberfläche.

**Beispiel 3: Verringerung der Teilchengröße der Nickelausgangsverbindung**

Eine Mahlung der in Beispiel 1 hergestellten Suspension in einer Ringspaltmühle (Fryma Koruma, Typ MS 12) konnte die mittlere Teilchengröße wie folgt reduzieren:

Tabelle 2:

| Mahlgang | Mittlere Teilchengröße |
|---|---|
| 1. Durchgang | 3,01 μm |
| 2. Durchgang | 2,96 μm |
| 3. Durchgang | 2,92 μm |
| 4. Durchgang | 2,65 μm |

**Beispiel 4: Herstellung von Nickeloxid aus einer Nickelausgangsverbindung mit verringerter Teilchengröße**

Die in Beispiel 3 gemahlene Suspension wurde erneut in den pulsierenden Wirbelschichtreaktor mit einer Aufgabemenge von 14 kg/h eingedüst. Das Produkt wies folgende Spezifikation auf:

Tabelle 3:

| Versuchspunkt | Temperatur [°C] | Spezifische Oberfläche (nach BET) [$m^2/g$] | $C_{ges}$. [Gew.-%] |
|---|---|---|---|
| 7 | 450 | 165 | 3,9 |

In Fig. 2 ist der Einfluss der Teilchengröße auf die spezifische Oberfläche und den Restkohlenstoffgehalt dargestellt.

Aus der Fig. 2 ist zu entnehmen, dass durch die Reduzierung der mittleren Teilchengröße des Nickeloxalats die spezifische Oberfläche deutlich ansteigt, der Restkohlenstoffgehalt hingegen sinkt.

Ursache dafür ist der schnellere Wärmetransport ins Innere des Teilchens und damit die Schaffung der notwendigen Bedingungen für eine Reaktionsumsetzung auch im Teilchen und nicht nur im äußeren Schalenbereich.

Ausgewählte Proben der hergestellten Nickeloxide wurden phasenanalytisch mittels Röntgendiffraktometrie (XRD) untersucht. Die Fig. 3 zeigt die Röntgendiffraktogramme. Folgende Aussagen lassen sich aus der Fig. 3 ableiten:

Als kristalline Phase wurde bei allen Proben NiO nachgewiesen. Die Peakintensität steigt mit zunehmender Behandlungstemperatur aufgrund höherer Kristallinität.

Zwei weitere Peaks konnten mit der vorhandenen Datenbank nicht identifiziert werden. Es besteht jedoch die Vermutung, dass diese Peaks dem Nickeloxalat bzw. einem seiner Umsetzungsprodukte zuzuordnen sind. Die Vermutung liegt darin begründet, dass die Intensität dieser Peaks mit steigender Prozesstemperatur abnimmt. Dies entspricht dem nachgewiesenen Verlauf der Umsetzung von Nickeloxalat zu NiO.

**Beispiel 5: Herstellung von Nickeloxid aus Nickeloxalat mit einer mittleren Teilchengröße von < 1 μm**

12 kg feuchtes Nickeloxalat mit einer mittleren Teilchengröße von 5.4 μm wurde mechanisch vorbehandelt, um mittlere Teilchengrößen von < 1 μm zu erreichen.

Das feuchte Nickeloxalat wurde mit destilliertem Wasser zu einer 39 Gew.-%igen Nickeloxalatsuspension versetzt und 2x in einer Ringspaltmühle (Fa. Fryma Koruma, Typ MS 12) mechanisch behandelt:

Tabelle 4 - Mahlung von Nickeloxalat in der Ringspaltmühle

| Mahlgang | mittlere Teilchengröße $d_{50}$ in μm |
|---|---|
| 1. Durchgang | 0.84 |
| 2. Durchgang | 0.79 |

Die mittlere Teilchengröße des Nickeloxalates konnte dadurch um etwa 4.6 μm reduziert werden.

Diese mechanisch vorbehandelte Suspension wurde anschließend mit weiterem destilliertem Wasser versetzt, um eine 10 Gew.-%ige Nickeloxalatsuspension zu erhalten und um analoge Bedingungen wie im vorhergehenden Versuch bereit zu stellen. Ähnlich wurde bei den Anlagenparametern verfahren, d.h. sowohl stofflich als auch anlagentechnisch wurden keine Veränderungen vorgenommen:

- Materialaufgabe mittels Zweistoffdüse,
- Aufgabemenge 14 kg/h Suspension,
- Rühren der Suspension, um Absetzen zu verhindern.

Als Prozessstarttemperatur wurde 460 °C festgelegt, was eine Erhöhung der Prozesstemperatur um 10 K im Vergleich zum vorhergehenden Versuch bedeutet.

Die Versuchsergebnisse sind in Tabelle 5 zusammengefasst:

Tabelle 5:

| Versuchspunkt | Prozesstemperatur in °C | Spezifische Oberfläche (nach BET) in $m^2/g$ | Gesamtkohlenstoff $C_{ges}$ in Gew.-% |
|---|---|---|---|
| 8 | 460 | 120 | 2.1 |
| 9 | 475 | 88 | 1.3 |
| 10 | 450 | 156 | 1.9 |

In Versuchspunkt 9 wurde die Prozesstemperatur um weitere 15 K erhöht, um den Gesamtkohlenstoffgehalt weiter zu reduzieren. Dies konnte sehr gut bestätigt werden, jedoch findet hier eine Abnahme der spezifischen Oberfläche statt.

Die Beeinflussung des Gesamtkohlenstoffes und der spezifischen Oberfläche sind gegenläufig: Der Gesamtkohlenstoffgehalt nimmt mit steigender Prozesstemperatur stetig ab, die spezifische Oberfläche des Nickeloxides verläuft dagegen über ein Maximum. Die optimale Prozesstemperatur liegt im Bereich von 450 bis 460 °C.

Um die Reproduzierbarkeit zu den vorhergehenden Versuchen zu untersuchen, wurde im Versuchspunkt 10 erneut eine Prozesstemperatur von 450 °C eingestellt. Die Probenentnahme in diesem Versuchspunkt wurde nicht am Filter sondern kurz nach dem Reaktorausgang vorgenommen, um eine Vermischung mit den Versuchspunkten 8-9 auszuschließen.

Der Gesamtkohlenstoffgehalt liegt mit 1.9 Gew.-% um 2 % niedriger im Vergleich zum früheren Versuchspunkt (3.9 Gew.-%). Ursache dafür ist die kleinere mittlere Teilchengröße des Nickeloxalates in der Suspension, was zu einem höheren Wärmeübergang ins Teilcheninnere und somit zu einer erhöhten Reaktionsumsetzung zum NiO führt.

Die oxidative Umsetzung von Nickeloxalat zum Nickeloxid erfolgt über Zwischenstufen. Eine mögliche Übergangsverbindung kann Nickelcarbonat sein. Als Vorteile von Nickelcarbonat gegenüber Nickeloxalat als Rohstoff sind neben betriebswirtschaftlichen Aspekten auch atomeffizientere Umsetzungen (Nickelgehalt) zu Nickeloxid:

Tabelle 6: Nickelgehalt in Nickeloxalat und Nickelcarbonat

| Rohstoff | Nickelgehalt in % |
|---|---|
| Nickeloxalatdihydrat | 32 |
| basisches Nickelcarbonat | 58 |

**Beispiel 6 (Vergleichsbeispiel): Herstellung von Nickeloxid aus Nickelcarbonat**

Basisches Nickelcarbonat $NiCO_3 \cdot 2\ Ni(OH)_2$ der Fa. Aldrich wurde zu einer Suspension verarbeitet. Die mittlere Teilchengröße des Feststoffes beträgt 5.4 μm. Um gleiche molare Verhältnisse im Vergleich zur Nickeloxalatsuspension zu gewährleisten, wurde der Feststoffgehalt bei der Nickelcarbonatsuspension auf 16 % eingestellt. Die Nickelcarbonatsuspension wurde bei einer Prozesstemperatur von 460 °C in die Wirbelschicht eingedüst. Um eine Vermischung mit den vorherigen Versuchspunkten zu vermeiden, wurde die Probenentnahme ebenfalls nach dem Reaktorausgang durchgeführt. Die Analysenergebnisse sind in Tabelle 7 zusammengefasst:

Tabelle 7: Versuchsergebnisse von Nickeloxid aus basischem Nickelcarbonat

| Versuchspunkt | Prozesstemperatur in °C | Spezifische Oberfläche (nach BET) in $m^2/g$ | Gesamtkohlenstoff $C_{ges}$ in Gew.-% |
|---|---|---|---|
| 11 | 460 | 62 | 0.2 |

Der Gesamtkohlenstoffwert von 0.2 Gew.-% entspricht der besonders bevorzugten Spezifikation des Kohlenstoffgehalts, welcher vorzugsweise unter 1 Gew.-% liegen sollte. Bei der Verwendung von basischem Nickelcarbonat wurde aber keine mechanische Vorbehandlung der Suspension vorgenommen.

**Beispiel 7 (Vergleichsbeispiel): Verringerung der Prozesstemperatur und Teilchengröße des Ausgangsmaterials**

Das verwendete basische Nickelcarbonat ($NiCO_3 \cdot 2\ Ni(OH)_2$) hat eine mittlere Teilchengröße von 5.4 μm. Die vollständige thermische Zersetzung derartig großer Rohstoffteilchen erweist sich in der pulsierenden Wirbelschicht aufgrund der sehr kurzen Verweilzeiten als problematisch. Eine vollständige Umsetzung kann dabei nur durch die

Erhöhung der Prozesstemperaturen erreicht werden, wobei dadurch gerade im Oberflächenbereich eine verstärkte Sinterung einsetzt. Die Folge davon sind niedrige spezifische Oberflächen.

Folglich soll auch in diesem Beispiel die Teilchengröße des Rohmaterials durch Aufmahlung reduziert werden. Kleinere Teilchengrößen führen zu einem reduzierten Temperaturgradienten ins Teilcheninnere und damit zu einer besseren Reaktionsumsetzung bei bereits niedrigeren Prozesstemperaturen im Heißgas.

Dafür wurde das basische Nickelcarbonat mit destilliertem Wasser zu einer 40 %-igen Nickelcarbonat-Suspension versetzt und 3x in einer Ringspaltmühle (Fa. *Fryma Koruma,* Typ MS 12) mechanisch behandelt:

Tabelle 8 - Mahlung von basischem Nickelcarbonat in der Ringspaltmühle

| **Mahlgang** | **mittlere Teilchengröße d50 [μm]** |
|---|---|
| Ausgang | 5.4 |
| 1. Durchgang | 1.7 |
| 2. Durchgang | 1.1 |
| 3. Durchgang | 0.8 |

Die Feststoffkonzentration der gewonnenen Suspension wurde anschließend durch Zugabe von Wasser auf 16 % eingestellt.

Die Anlagenkonfiguration sowie die eingestellten Prozessparameter entsprachen ebenfalls den Einstellungen der bisherigen Beispiele. Das Versuchsmaterial (Suspension) wurde mittels Zweistoffdüse mit einer Aufgabemenge von 14 kg/h Suspension in den Reaktor durch feinteiliges Versprühen aufgegeben. Die Rohstoffsuspension wurde während des gesamten Versuchs gerührt, um ein Absetzen zu verhindern.

Für den 1. Versuchspunkt wurde eine Prozess-Starttemperatur von 450 °C festgelegt. Anschließend wurde in 25 K Schritten die Prozesstemperatur solange reduziert, bis der Gesamtkohlenstoffgehalt auf Werte von > 1 Gew.-% anstieg. Ziel dabei war das Optimum der spezifischen Oberfläche festzustellen. Die Versuchsergebnisse sind in Tabelle 9 zusammengefasst:

Tabelle 9 - Versuchsergebnisse - NiO aus basischem Nickelcarbonat

| **Versuchspunkt** | **Prozesstemperatur** [°C] | **Spezifische Oberfläche** (nach BET) [$m^2/g$] | **Gesamtkohlenstoff $C_{ges}$** [Gew.-%] |
|---|---|---|---|
| 1 | 450 | 77 | 0.3 |
| 2 | 425 | 84 | 0.4 |
| 3 | 400 | 94 | 0.5 |
| 4 | 375 | 121 | 0.9 |
| 5 | 350 | 134 | 1.4 |

Wie aus Tabelle 10 ersichtlich wird, konnte ein feinteiliges NiO mit einer spezifischen Oberfläche von 121 $m^2/g$ und einem Gesamtkohlenstoffgehalt von < 1 Gew.-% erhalten werden. Das Maximum der spezifischen Oberfläche lag bei 134 $m^2/g$ bei einem etwas höheren Gesamtkohlenstoffgehalt von 1,4 Gew.-%.

**Beispiel 7-1 (Vergleichsbeispiel): Herstellung von Nickeloxid aus basischer Nickelcarbonatpaste**

Als Nickelausgangsverbindung wurde basische Nickelcarbonatpaste $Ni(OH)_2CO_3$ der Firma OMG Kokkola Chemicals OY verwendet. Mit dieser Paste konnte ein Nickeloxid mit folgenden Spezifikationen erhalten werden:

| | |
|---|---|
| Spezifische Oberfläche nach BET: | 244 +/- 5 $m^2/g$ |
| Gesamtkohlenstoff: | 1,0 +/- 0,05 % |
| Durchschnittliche Partikelgröße: | d50 = 13 μm |
| Farbe: | schwarz |
| Kristallographische Phase: (Röntgendiffraktometer) | kristallin |

**Zusammenfassung hinsichtlich der Herstellung von NiO**

In Tabelle 10 sind die Ergebnisse der durchgeführten Versuche aus unterschiedlichen Rohstoffen zur Herstellung von feinteiligem NiO zusammengefasst:

Tabelle 10 - Versuchsergebnisse - NiO aus verschiedenen Rohstoffen

| **Rohstoff** | **mittlere Teilchengröße d50** in µm | **Prozesstemperatur** in °C | **Spezifische Oberfläche** (nach BET) in $m^2/g$ | Gesamt**kohlenstoff Cges** in Gew.-% |
|---|---|---|---|---|
| NickeloxalatSuspension | 2.7 | 450 | 165 | 3.9 |
| NickeloxalatSuspension | 0.8 | 450 | 156 | 1.9 |
| bas. Nickelcarbonatsupension | 0.8 | 350 | 134 | 1.4 |
| bas. Nickelcarbonatpaste | 13 | 400 | 244 +/- 5 | 1,0 +/-0,05 |

Alle Versuche wurden zudem wiederholt, wobei unterschiedliche Promotoren in unterschiedlichen Mengenverhältnissen mit eingesetzt wurden. Ergebnisse dazu finden sich im nachstehenden Abschnitt "Hydrierversuche".

Aus den Versuchen mit unterschiedlichen Rohstoffen (Nickeloxalat und basischem Nickelcarbonat) zur Herstellung von Nickeloxid mit hohen spezifischen Oberflächen können folgende Aussagen abgeleitet werden:

Basische Nickelcarbonatpaste erbrachte die höchsten spezifischen Oberflächen mit bis zu 350 $m^2/g$ (244 $m^2/g$ bei etwa 1 % Restkohlenstoffgehalt). Die Herstellung von feinteiligem Nickeloxid ist auch mit Nickeloxalat durchführbar. Bei einer Prozesstemperatur von 450 °C und einer Nickeloxalatsuspension mit mittleren Teilchengrößen < 1 µm wird ein NiO mit einer spezifischen Oberflächen von 165 $m^2/g$ und einem Gesamtkohlenstoffgehalt von 3.9 Gew.-% erhalten.

Durch die Versuche konnte die Abhängigkeit der spezifischen Oberfläche und des Restkohlenstoffs von der Prozesstemperatur gezeigt werden. Dabei bewirkte die Reduzierung der Teilchengröße der Nickelausgangsverbindung einen deutlichen Anstieg der spezifischen Oberfläche des Nickeloxids und eine Reduzierung des Restkohlenstoffgehaltes.

**Hydrierversuche:**

**Beispiel 8: Porenverteilung**

(nicht erfindungsgemäß)

Figur 4 zeigt die Porenverteilung von Raney-Nickel im Vergleich zu dem in Beispiel 7-1 hergestelltem NiO, welches zusätzlich 5 Gew.-% W enthält. Dem Verlauf der Porenverteilung ist zu entnehmen, dass es bei Raney-Nickel zu einer erhöhten Konzentration der Poren in Bereichen von 1000-10000 nm kommt.

Im Gegensatz dazu hat der Katalysator 5 Gew.-% W/ NiO eine über das Spektrum relativ gleiche Verteilung der Poren.

**Beispiel 9: Hydrierung von Octen**

(nicht erfindungsgemäß)

Als Beispielreaktion für die Bestimmung der katalytischen Aktivität zwischen den undotierten Nickeloxiden, dotierten Nickeloxiden und Raney-Nickel wird die Hydrierung von Octen verwendet. Demnach findet bei der Hydrierung von Octen eine Doppelbindungsverschiebung (wie in der Figur 5 dargestellt) statt. Jedoch hat die Doppelbindungsverschiebung keinen Einfluss auf die Bildung von Octan, da die Hydrierung der Octenisomere mit derselben Reaktionsgeschwindigkeit erfolgt, wie die direkte Umsetzung von 1-Octen zu Octan. Deshalb wird für die Versuchsauswertung die Änderung der Konzentrationen aller Octenisomere betrachtet. Die Doppelbindungsverschiebung sowie die Hydrierungsreaktion von Octen und den Octenisomeren zeigt Figur 6. Hierbei entspricht der experimentell ermittelte Reaktionsmechanismus genau den in der Literatur gefundenen Ergebnissen. Einen Unterschied der eingesetzten Katalysatoren war bezüglich des Reaktionsmechanismus nicht erkennbar. Signifikante Veränderungen konnten nur bei der Reaktionsgeschwindigkeit festgestellt werden.

**Beispiel 10: Octenhydrierung mit verschiedenen Pd-dotierten Nickeloxiden im Vergleich mit Raney-Nickel**

(nicht erfindungsgemäß)

Figur 7 zeigt die Ergebnisse einer Hydrierung von Octen (T = 55°C, m(Kat) = 0,3 g; V ($C_8H_{16}$) = 1,5 ml, V ($CH_3OH$) = 50ml) mit verschiedenen Katalysatoren. Der Figur 7 kann man deutlich entnehmen, dass aktiviertes Nickeloxid eine deutlich bessere katalytische Aktivität aufweist als Raney-Nickel. Der Zusatz von Palladium diente nur dazu, die Wasserstoffaufnahme während der Reduktion des Nickeloxids zu verbessern. Palladium als Promotor machte sich bei der Hydrierung dahingehend positiv bemerkbar, dass die katalytische Aktivität nochmals stark anstieg. Da Palladium ein ebenso bekannter Hydrierkatalysator ist, resultierte die Verbesserung der katalytischen Aktivität des dotierten Nickeloxids mit großer Wahrscheinlichkeit auf der Aktivität des Palladiums, was aus der Figur 8 ersichtlich ist.

Es konnte der Einfluss von Palladium auf die katalytische Aktivität bei der Hydrierungsreaktion von Octen nachgewiesen werden, indem ein Palladium Katalysator auf einem $SiO_2$-Träger mit der dotierten Nickeloxidprobe verglichen wurde. Hierbei ist deutlich die katalytische Aktivität auf die Hydrierungsreaktion von Octen erkennbar, so dass der Nickeloxidkatalysator das Produkt der Aktivitäten von Palladium und elementarem Nickel ist, womit bewiesen wurde, dass der reduzierte Katalysator eine sehr gute katalytische Aktivität aufweist.

**Beispiel 11: Octenhydrierung mit verschieden dotierten Nickeloxiden im Vergleich mit Raney-Nickel**

(nicht erfindungsgemäß)

Figur 9 zeigt die Ergebnisse eines Vergleichs einer Octenhydrierung mit verschieden dotierten Nickeloxiden gegenüber einer Hydrierung mit Raney-Nickel. Bei der Hydrierung von Octen kann zusammenfassend gesagt werden, dass alle Katalysatoren eine sehr gute Aktivität aufweisen, jedoch die mit Wolfram, Niob und Chrom dotierten Katalysatoren wiesen eine deutliche verbesserte katalytische Aktivität im Vergleich zu Raney-Nickel auf.

**Beispiel 12: Reaktionsmechanismus von 2-Ethylhexenal**

Neue Erkenntnisse wurden bei der Bestimmung des Reaktionsmechanismus von 2-Ethylhexenal gewonnen.

Hierbei ist die Reihenfolge der Hydrierung der Doppelbindung von Interesse. Die Hydrierungsreaktion findet dabei entsprechend nachstehender Gleichung statt:

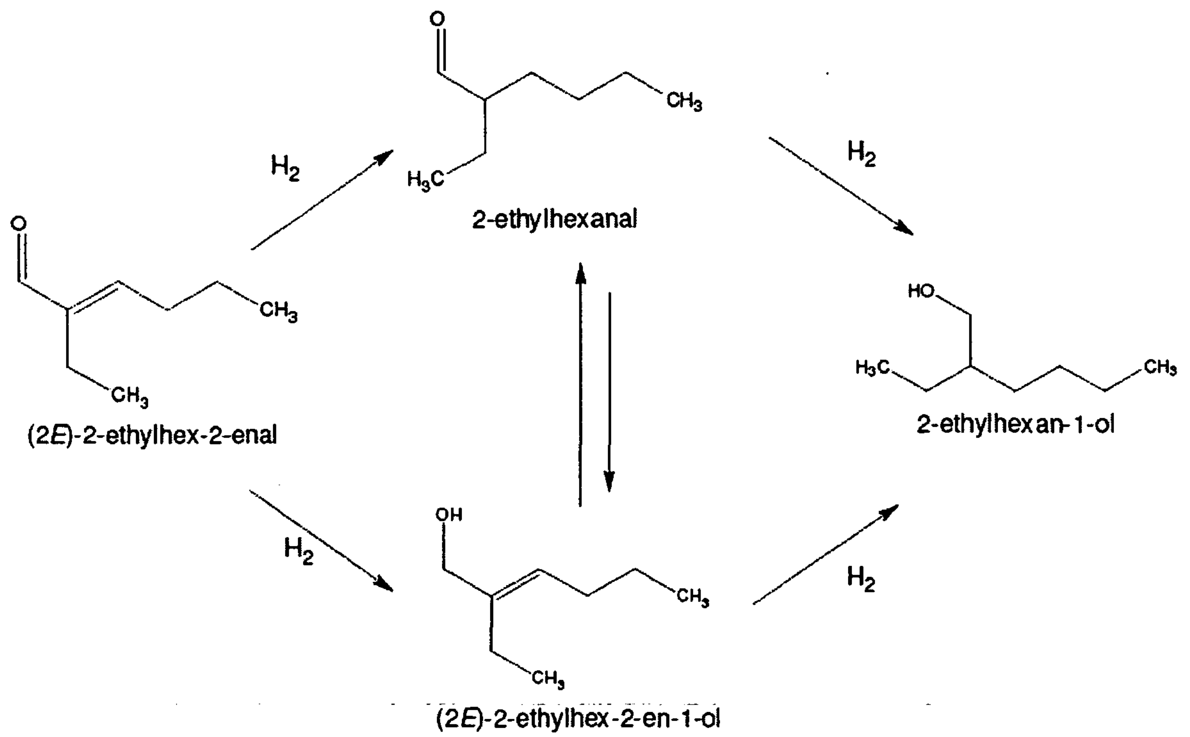


2-ethylhexanal

(2*E*)-2-ethylhex-2-enal

2-ethylhexan-1-ol

(2*E*)-2-ethylhex-2-en-1-ol

Es wurden dabei folgende Versuchsparameter eingewogen und eingestellt:

- 5 ml 2-Ethylhexenal,
- 100 ml $CH_3OH$,
- 0,3 g Kat.
- T 55 °C,
- p = 8 bar

Der Reaktionsmechanismus der Hydrierung war bei beiden eingesetzten Katalysatoren der Gleiche. Signifikante Unterschiede gab es allerdings hinsichtlich der Endprodukte, wobei es bei dem 5 Gew.-% W/ NiO Katalysator vermutlich zu einer Desaktivierung durch das Lösungsmittel Methanol gekommen ist. Raney-Nickel lässt die Hydrierung einer bisher noch unbekannten Substanz im viel größeren Maße zu, als der Katalysator 5 Gew.-% W/ NiO.

**Beispiel 13:**

(nicht erfindungsgemäß)

Im Folgenden wurde auch noch eine Dotierung mit Aluminiumhydroxidacetathydrat an einem NiO (Beispiel 7-1) vorgenommen.

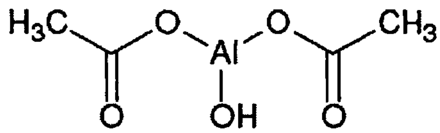

In Figur 12 ist deutlich zu erkennen, dass mit steigendem Aluminiumgehalt die spezifische Aktivität des Katalysators steigt, wobei bei einem Aluminiumgehalt > 20 % sogar die Performance von Raney-Nickel überboten wird.

**Zusammenfassung der Ergebnisse der Hydrierversuche:**

Zusammengefasst ergibt sich, dass der hergestellte Nickelkatalysator bei der Hydrierung einer C=C-Doppelbindung eine deutlich bessere katalytische Aktivität aufweist als der Referenzkatalysator Raney-Nickel. Vorteile hinsichtlich des Reaktionsmechanismus besitzt Nickeloxid bei Reaktionen, die sich leicht sauer katalysieren lassen. So z.B. bei der Hydrierung von 2-Ethylhexenal. Bei oberflächenrelevanten Eigenschaften besitzt Nickeloxid im Gegensatz zu Raney-Nickel eine Oberfläche, die bis zu 100-mal höher ist. Bei der Verteilung der Poren stößt man auf ein weit verbreitertes Spektrum von 10-1.000.000 nm, wobei es im Bereich 1.000 bis 10.000 nm zu einer Konzentration der Porenhäufigkeit kommt.

**Patentansprüche**

1. Verfahren zur Herstellung von nanokristallinem Nickeloxidmaterial, umfassend die Schritte

   a) des Einbringens einer Nickelausgangsverbindung in eine Reaktionskammer mittels eines Trägerfluids, wobei die Nickelausgangsverbindung ein Salz einer organischen Säure ist und wobei die Nickelausgangsverbindung in Form einer Lösung, Aufschlämmung, Suspension oder in festem Aggregatszustand in die Reaktionskammer eingebracht wird,
   b) einer thermischen Behandlung der Nickelausgangsverbindung in einer Behandlungszone mittels einer pulsierenden Strömung bei einer Temperatur von 200 bis 550 °C,
   c) des Bildens von nanokristallinem Nickeloxidmaterial,
   d) des Ausbringens des in Schritt b) und c) erhaltenen nanokristallinen Nickeloxidmaterials aus dem Reaktor.

2. Verfahren nach Anspruch 1, **dadurch kennzeichnet, dass** die Nickelausgangsverbindung eine durchschnittliche Teilchengröße von kleiner 10 μm besitzt.

3. Verfahren nach Anspruch 1 oder 2, **dadurch gekennzeichnet, dass** die Teilchengröße durch Vermahlen einer Suspension der Nickelausgangsverbindung erhalten wird.

4. Verfahren nach einem der Ansprüche 1 bis 3, **dadurch gekennzeichnet, dass** als organische Säure eine Säure

mit wenigstens einer Carboxyl-Gruppe eingesetzt wird.

**5.** Verfahren nach einem der Ansprüche 1 bis 4, **dadurch gekennzeichnet, dass** die organische Säure weniger als 9 Kohlenstoffatome besitzt.

**6.** Verfahren nach einem der Ansprüche 1 bis 5, **dadurch gekennzeichnet, dass** die organische Säure ausgewählt ist aus Glyoxalsäure, Oxalsäure oder deren Derivaten.

**7.** Verfahren nach einem der Ansprüche 1 bis 6, **dadurch gekennzeichnet, dass** neben der Nickelausgangsverbindung noch weitere Verbindungen in dem Verfahren eingesetzt werden.

**8.** Verfahren nach Anspruch 7, **dadurch gekennzeichnet, dass** die weiteren Verbindungen Träger, Binder und/oder Promotoren sind.

**9.** Verfahren nach Anspruch 8, **dadurch gekennzeichnet, dass** als Promotor Al, W, Pd, Pt, Rh, Ru, Ag, Nb, Cu, Cr, Co, Mo, Fe und/oder Mn verwendet wird.

## Claims

**1.** Process for producing nanocrystalline nickel oxide material, which comprises the steps

a) introduction of a nickel starting compound into a reaction chamber by means of a carrier fluid, where the nickel starting compound is a salt of an organic acid and the nickel starting compound is introduced in the form of a solution, slurry, suspension or in the solid state into the reaction chamber,
b) thermal treatment of the nickel starting compound in a treatment zone by means of a pulsating flow at a temperature of from 200 to 550°C,
c) formation of nanocrystalline and nickel oxide material,
d) discharge of the nanocrystalline nickel oxide material obtained in steps b) and c) from the reactor.

**2.** Process according to Claim 1, **characterized in that** the nickel starting compound has an average particle size of less than 10 μm.

**3.** Process according to Claim 1 or 2, **characterized in that** the particle size is obtained by milling of a suspension of the nickel starting compound.

**4.** Process according to any of Claims 1 to 3, **characterized in that** an acid having at least one carboxyl group is used as organic acid.

**5.** Process according to any of Claims 1 to 4, **characterized in that** the organic acid has less than 9 carbon atoms.

**6.** Process according to any of Claims 1 to 5, **characterized in that** the organic acid is selected from among glyoxalic acid, oxalic acid and derivatives thereof.

**7.** Process according to any of Claims 1 to 6, **characterized in that** further compounds apart from the nickel starting compound are used in the process.

**8.** Process according to Claim 7, **characterized in that** the further compounds are supports, binders and/or promoters.

**9.** Process according to Claim 8, **characterized in that** Al, W, Pd, Pt, Rh, Ru, Ag, Nb, Cu, Cr, Co, Mo, Fe and/or Mn is used as promoter.

## Revendications

**1.** Procédé de fabrication d’un matériau d’oxyde de nickel nanocristallin, comprenant les étapes suivantes :

a) l’introduction d’un composé de départ de nickel dans une chambre de réaction au moyen d’un fluide support,

le composé de départ de nickel étant un sel d'un acide organique et le composé de départ de nickel étant introduit dans la chambre de réaction sous la forme d'une solution, d'une suspension épaisse, d'une suspension ou à l'état d'agrégat solide,
b) un traitement thermique du composé de départ de nickel dans une zone de traitement au moyen d'un courant pulsé à une température de 200 à 550 °C,
c) la formation d'un matériau d'oxyde de nickel nanocristallin,
d) le déchargement du matériau d'oxyde de nickel nanocristallin obtenu aux étapes b) et c) du réacteur.

**2.** Procédé selon la revendication 1, **caractérisé en ce que** le composé de départ de nickel présente une taille de particule moyenne inférieure à 10 μm.

**3.** Procédé selon la revendication 1 ou 2, **caractérisé en ce que** la taille de particule est obtenue par broyage d'une suspension du composé de départ de nickel.

**4.** Procédé selon l'une quelconque des revendications 1 à 3, **caractérisé en ce qu'**un acide contenant au moins un groupe carboxyle est utilisé en tant qu'acide organique.

**5.** Procédé selon l'une quelconque des revendications 1 à 4, **caractérisé en ce que** l'acide organique comprend moins de 9 atomes de carbone.

**6.** Procédé selon l'une quelconque des revendications 1 à 5, **caractérisé en ce que** l'acide organique est choisi parmi l'acide glyoxalique, l'acide oxalique ou leurs dérivés.

**7.** Procédé selon l'une quelconque des revendications 1 à 6, **caractérisé en ce qu'**en plus du composé de départ de nickel, d'autres composés sont encore utilisés dans le procédé.

**8.** Procédé selon la revendication 7, **caractérisé en ce que** les autres composés sont des supports, des liants et/ou des promoteurs.

**9.** Procédé selon la revendication 8, **caractérisé en ce qu'**Al, W, Pd, Pt, Rh, Ru, Ag, Nb, Cu, Cr, Co, Mo, Fe et/ou Mn sont utilisés en tant que promoteur.

Fig. 1

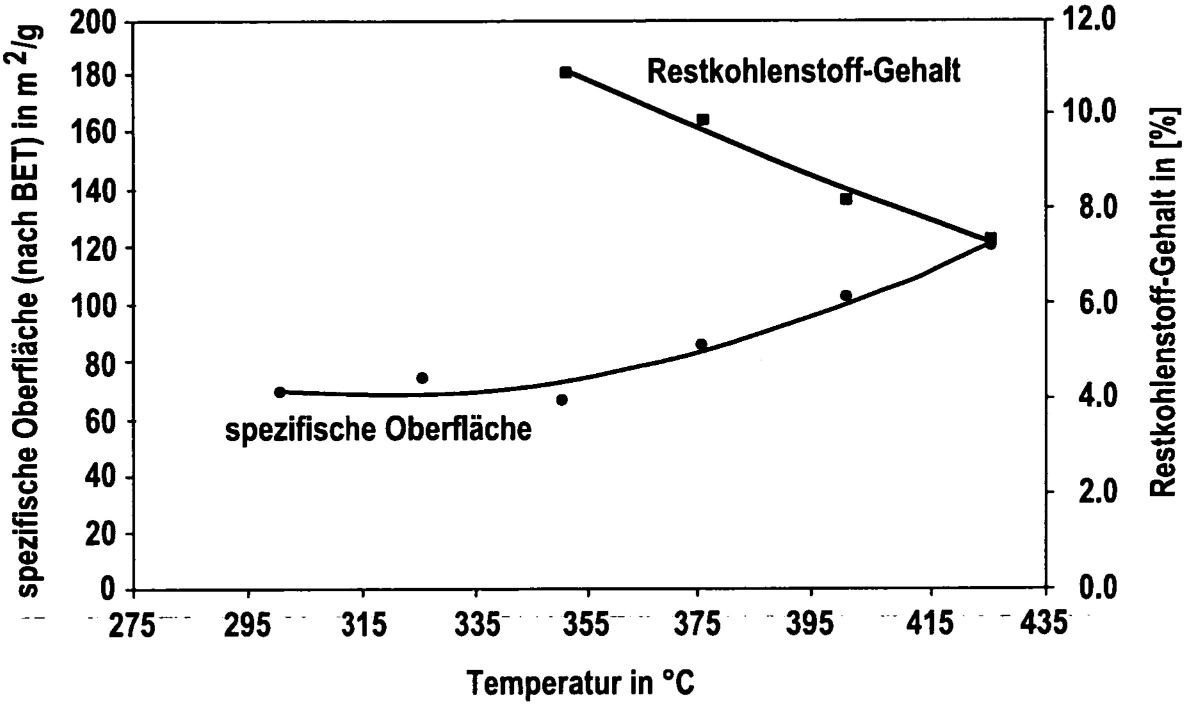
spezifische Oberfläche (nach BET) in m²/g
200
180
160
140
120
100
80
60
40
20
0
Restkohlenstoff-Gehalt
spezifische Oberfläche
12.0
10.0
8.0
6.0
4.0
2.0
0.0
Restkohlenstoff-Gehalt in [%]
275
295
315
335
355
375
395
415
435
Temperatur in °C

Fig. 2

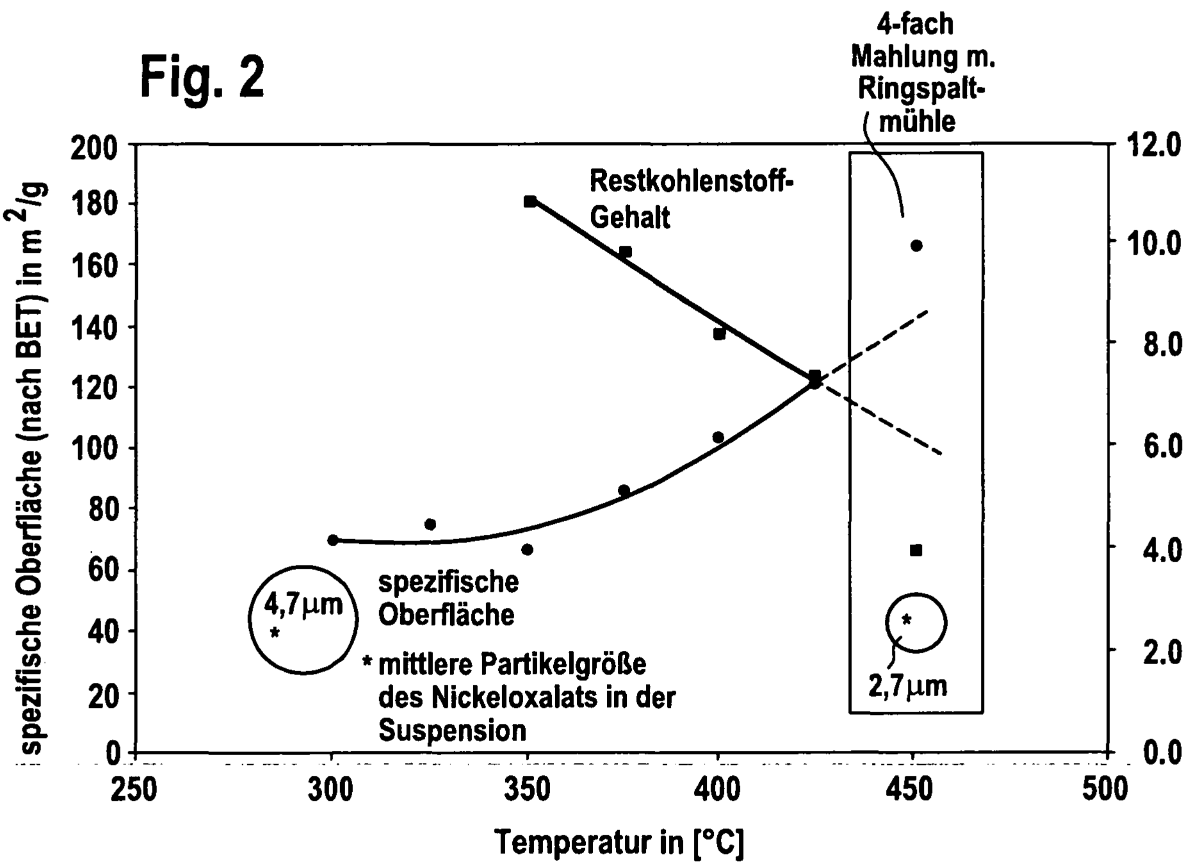
4-fach
Mahlung m.
Ringspalt-
mühle
Restkohlenstoff-
Gehalt
spezifische
Oberfläche
4,7µm
*
* mittlere Partikelgröße
des Nickeloxalats in der
Suspension
2,7µm
spezifische Oberfläche (nach BET) in m2/g
Temperatur in [°C]
0
20
40
60
80
100
120
140
160
180
200
0.0
2.0
4.0
6.0
8.0
10.0
12.0
250
300
350
400
450
500

Fig. 3

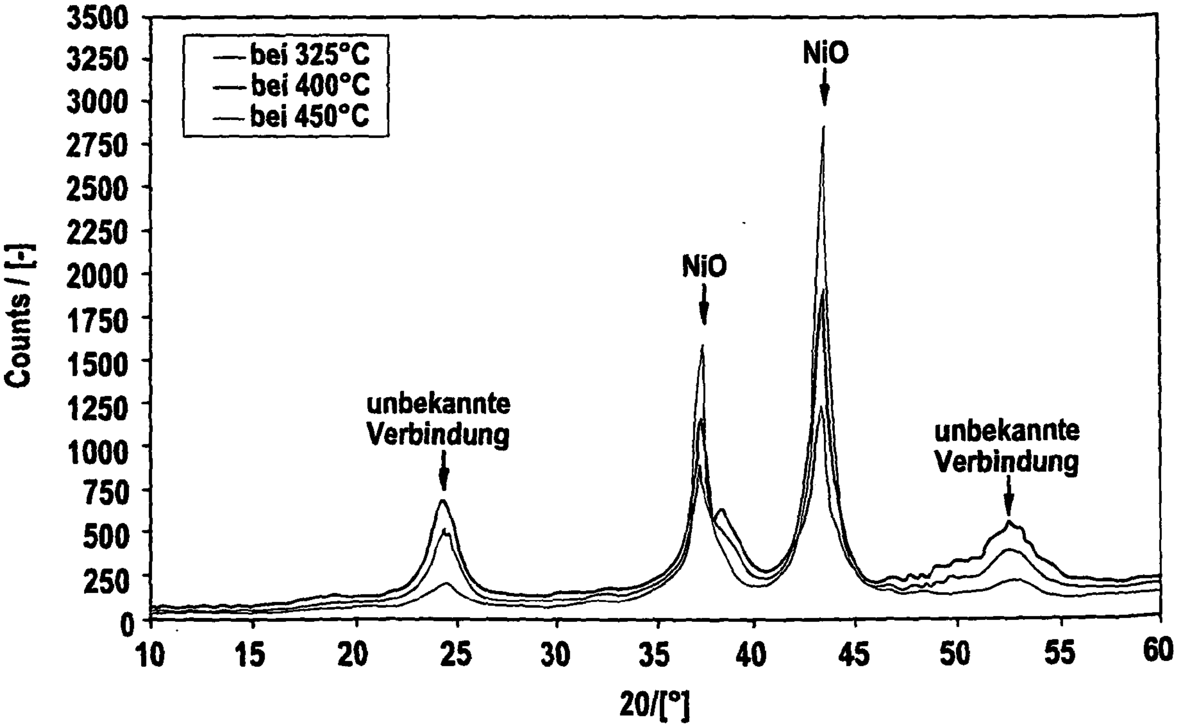
bei 325°C
bei 400°C
bei 450°C
NiO
NiO
unbekannte Verbindung
unbekannte Verbindung
Counts / [-]
3500
3250
3000
2750
2500
2250
2000
1750
1500
1250
1000
750
500
250
0
10
15
20
25
30
35
40
45
50
55
60
2θ/[°]

Fig. 4

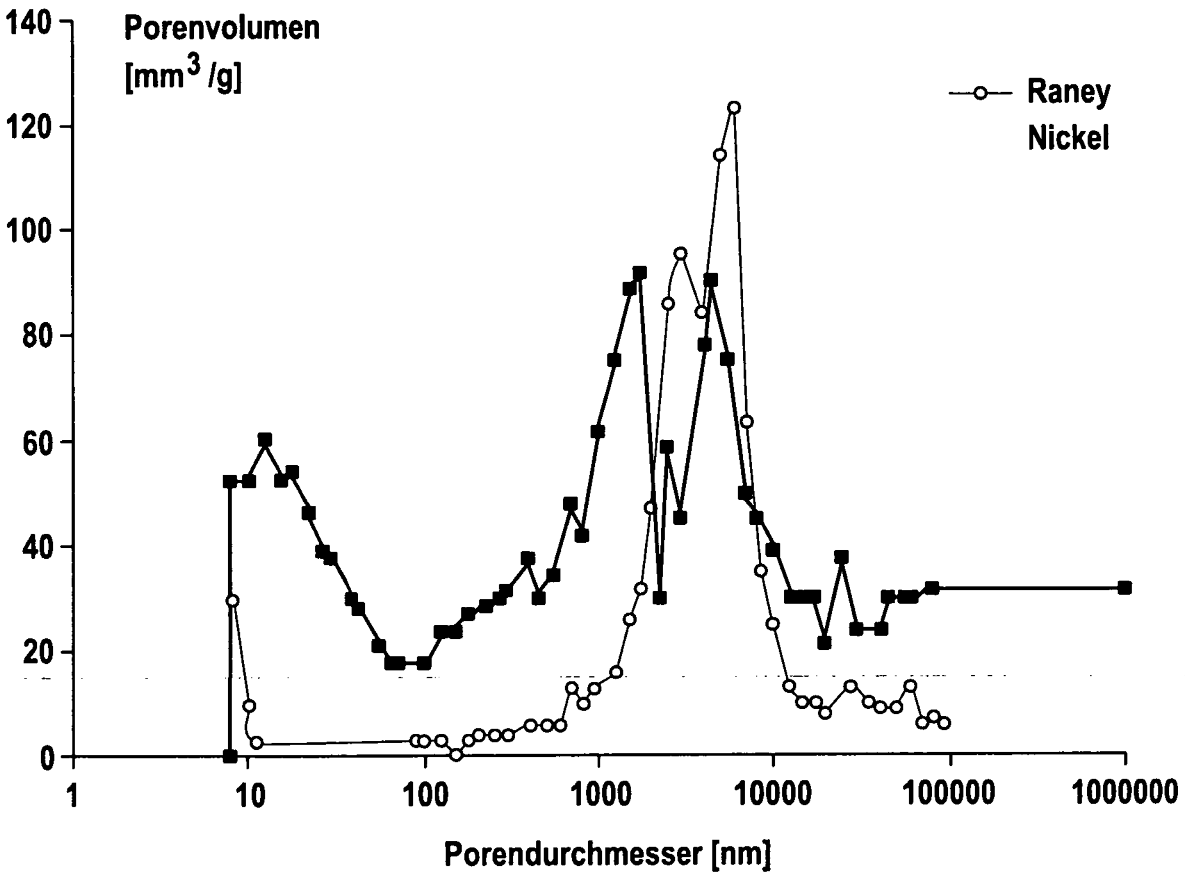
Porenvolumen
[mm3 /g]
140
120
100
80
60
40
20
0
Raney
Nickel
1
10
100
1000
10000
100000
1000000
Porendurchmesser [nm]

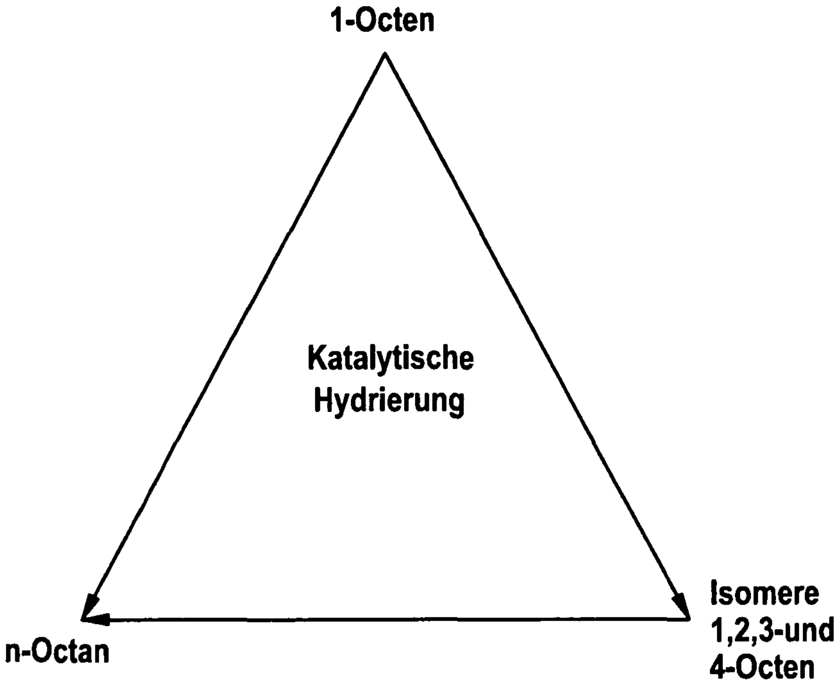
1-Octen
Katalytische
Hydrierung
n-Octan
Isomere
1,2,3-und
4-Octen

Fig. 5

# Fig. 6

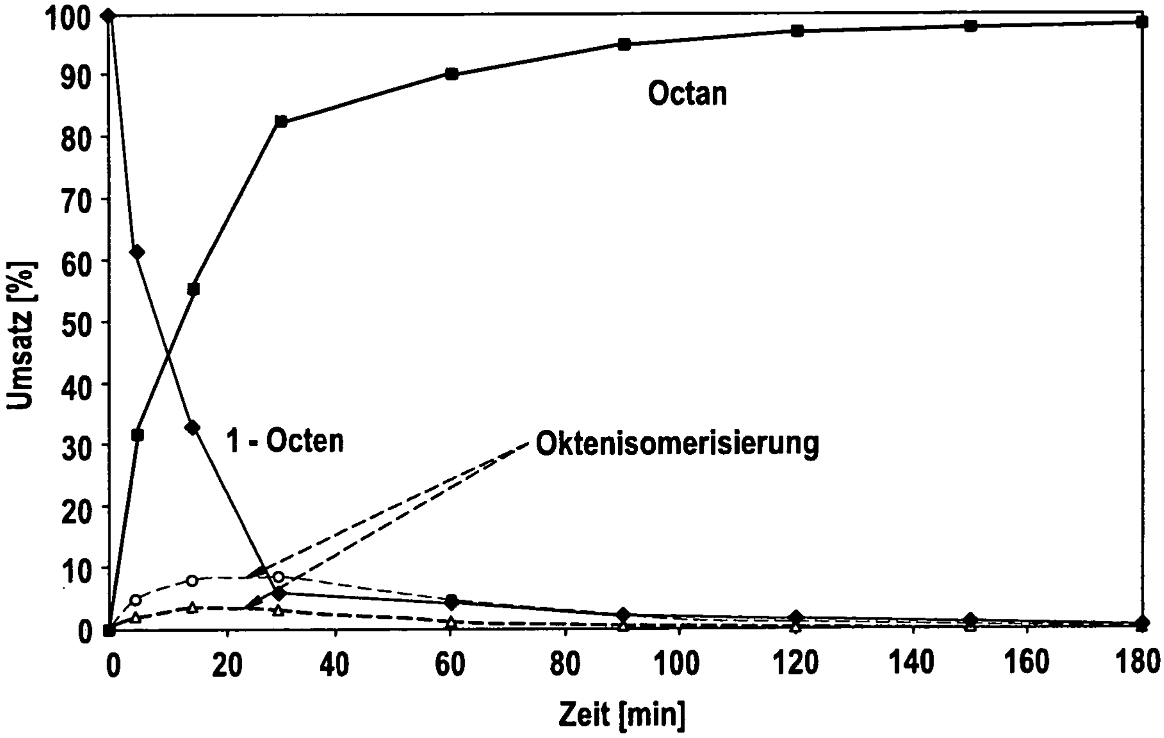
100
90
80
70
60
50
40
30
20
10
0
Umsatz [%]
Octan
1 - Octen
Oktenisomerisierung
0
20
40
60
80
100
120
140
160
180
Zeit [min]

# Fig. 7

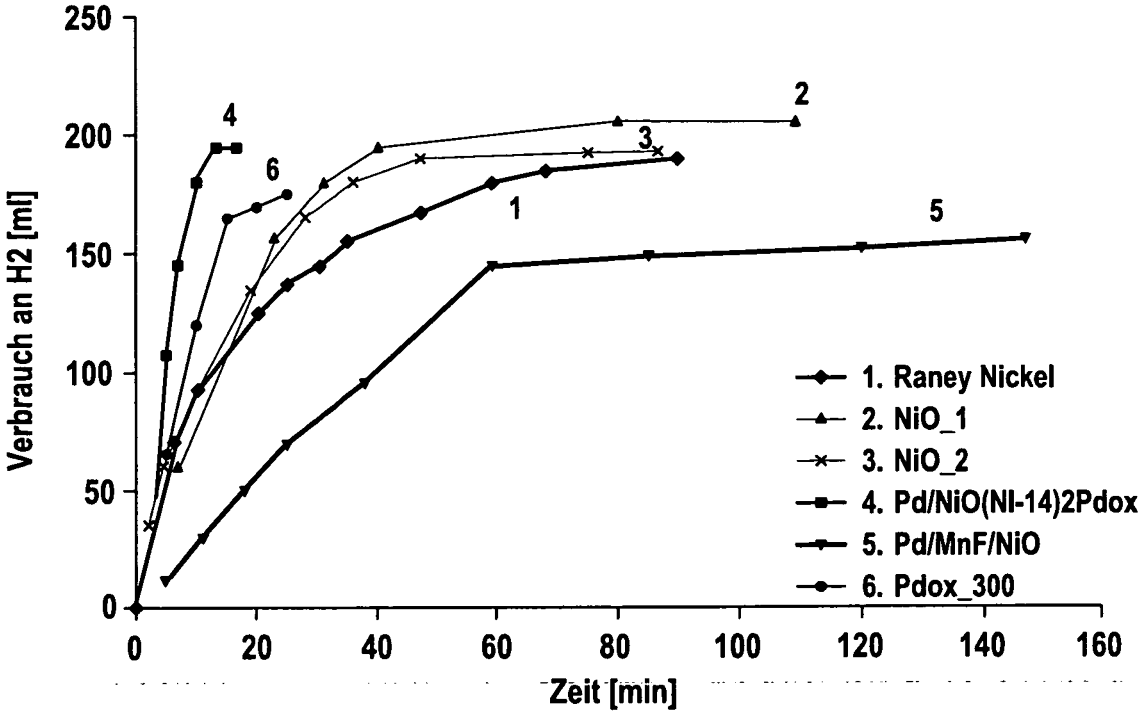


Hydrierung von Octen (T=55°C, m(Kat)=0,3g; $V(C_8H_{16})$=1,5ml, $V(CH_3OH)$=50ml) mit verschiedenen Katalysatoren

Fig. 8

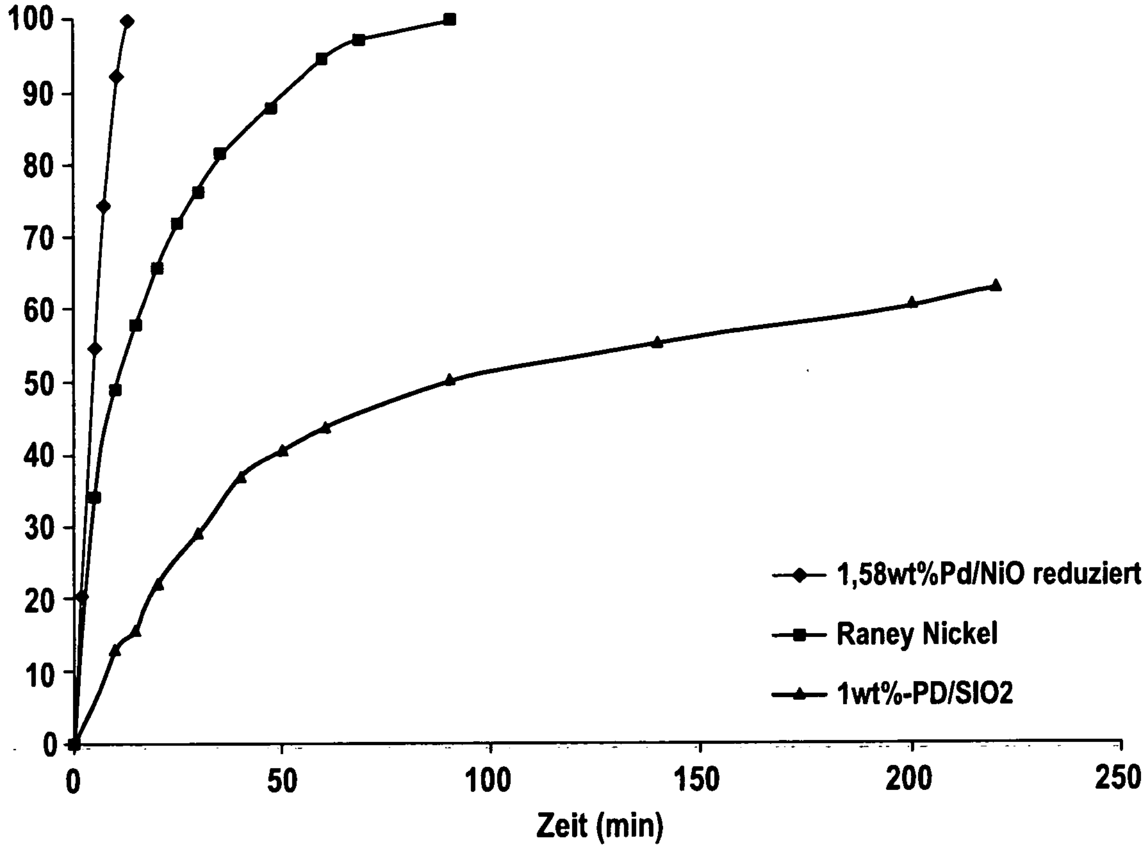


Bestimmung des Einflüsse auf die katalytische Aktivität von Nickeloxid bei einer Hydrierungsreaktion von Octen ($T=55°C$, m(Kat)= 0,3g; $V(C_8H_{16})$=1,5ml, $V(CH_3OH)$=50ml)

Fig. 9

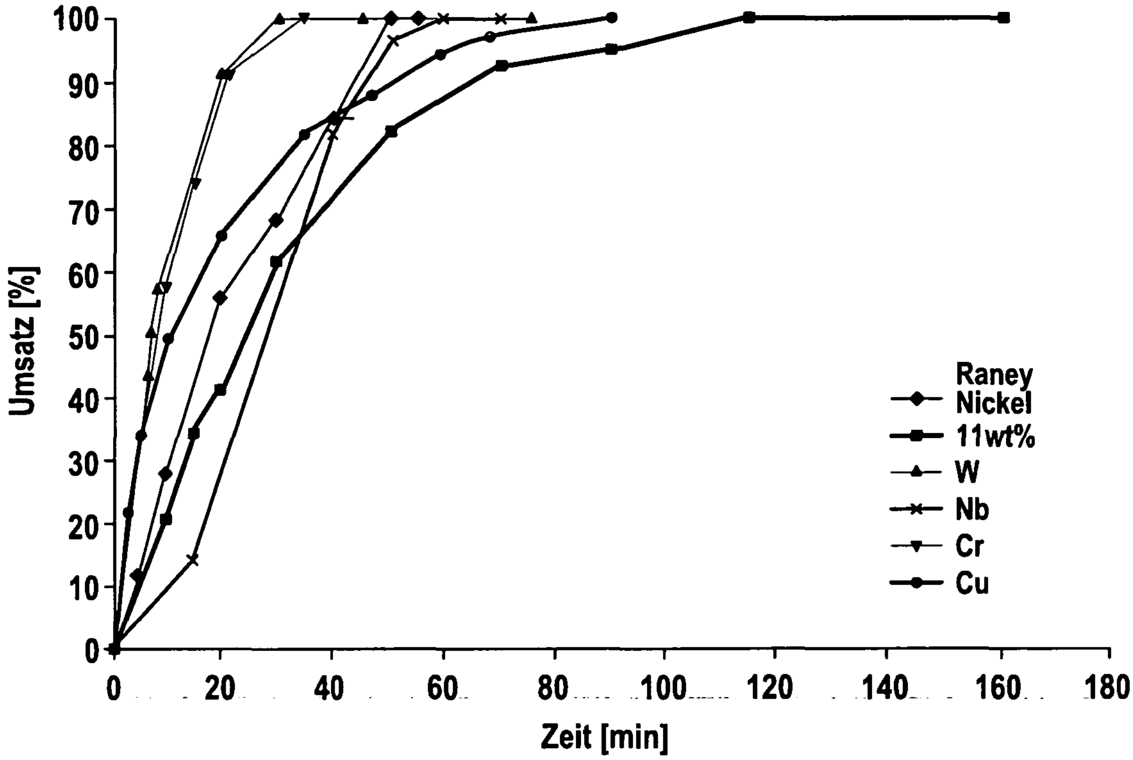


**Zusammenfassung verschiedener Katalysatoren bei der Hydrierung von Octen (T=55°C, m(Kat)= 0,3g; V($C_8H_{16}$)= 1,5ml, V($CH_3OH$)= 50ml)**

## Fig. 10

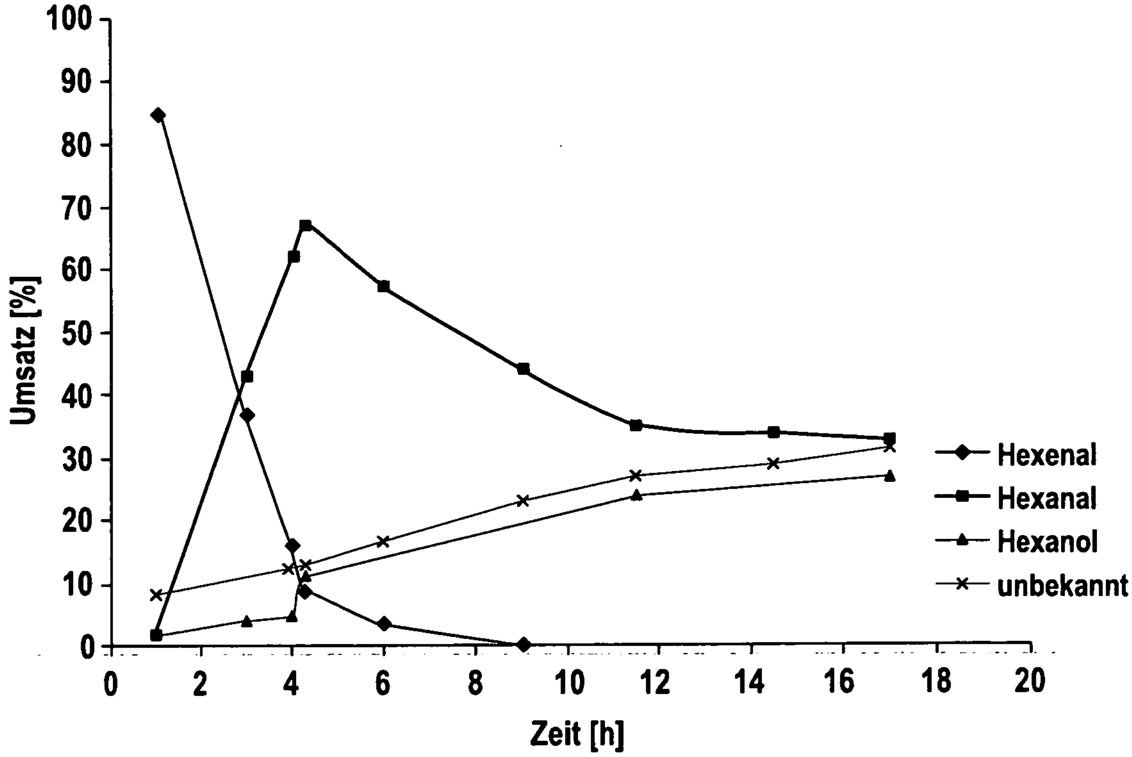


**Abb. 0-1 Hydrierung von 2-Ethylhexenal mit 5wt% W/NiO (5ml 2-Ethylhexenal, 100ml CH3OH, 55°C, 8bar)**

# Fig. 11

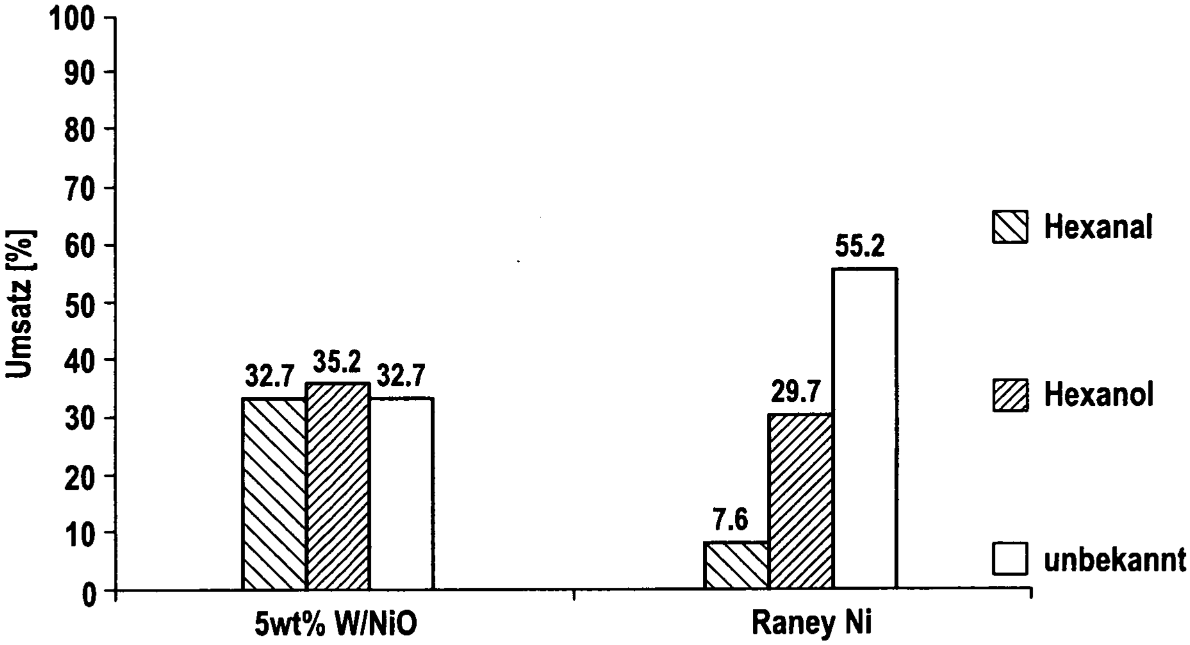


Darstellung der Ergebnisse einer Hydrierung von 2-Ethylhexenal
(5ml 2-Ethylhexenal, 100ml $CH_3OH$, 55°C, 8 bar)
mit einem dotierten NiO und Raney-Ni.

# Fig. 12

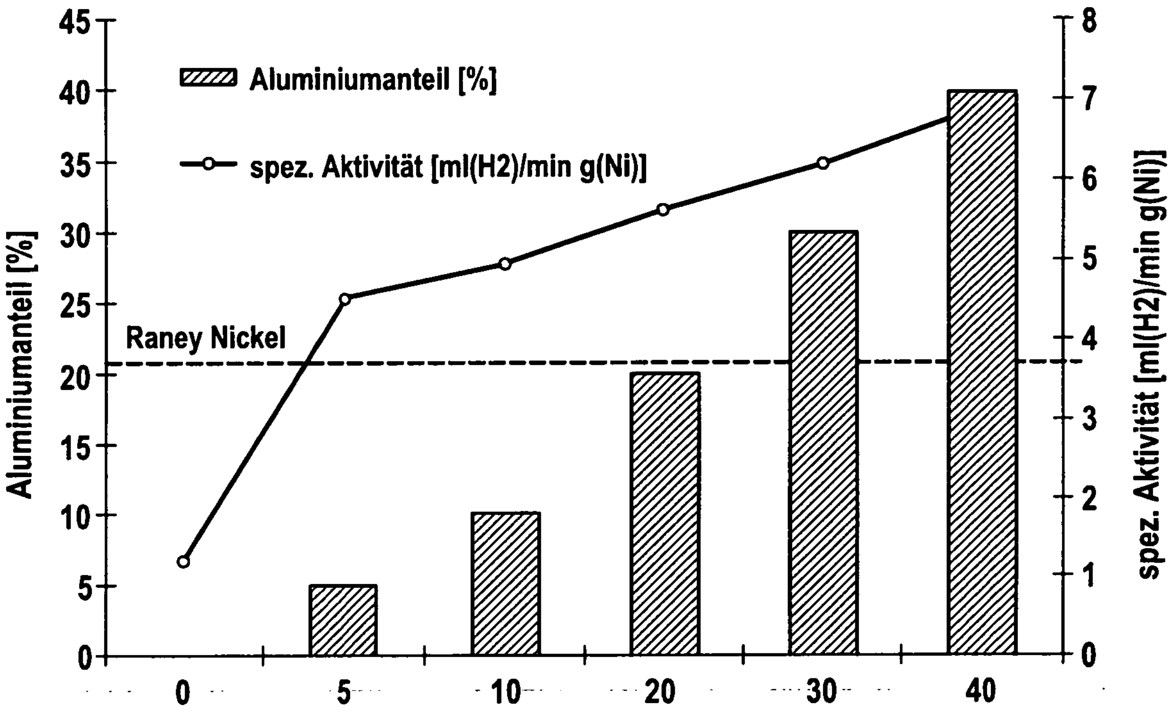


Spezifische Aktivität bezogen auf Nickel in $\frac{ml(H_2)}{min \cdot g(Ni)}$
mit unterschiedlichen Dotierungen von Ni-Katalysatoren

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006027270 A
- DE 102006032452 A1
- WO 2008028681 A
- DE 10109892 A1


### In der Beschreibung aufgeführte Nicht-Patentliteratur


- **R. KRIEGEL ; CH. KAPS ; THÜRINGER WERKSTOFFTAG.** Röntgendiffraktometrische Rietveld-Analyse von nanokristallinen Precursoren und Keramiken. Verlag Dr. Köster, 2004, 51-56